# FASCICULE DE BREVET EUROPEEN

(11) **EP 1 759 501 B1**
(45) Date de publication et mention de la délivrance du brevet: **27.08.2008**
(21) Numéro de dépôt: 05778972.9
(22) Date de dépôt: 21.06.2005
(51) Int. Cl.: H04L 12/56, H04L 12/28

(54) **SYSTEME D'ACCES MULTIMEDIA ET INTERNET -B-WAN**
MULTIMEDIA UND INTERNET-B-WAN ZUGANGSVERFAHREN
BROADBAND WIRELESS ACCESS NETWORK/INTERNET AND MULTIMEDIA ACCESS SYSTEM

(30) Priorité: 25.06.2004 FR 0407008
(43) Date de publication de la demande: 07.03.2007
(73) Titulaire: THALES, 92200 Neuilly sur Seine (FR)
(72) Inventeur: MAGNE, François, Thales Intellectual Property, F-94117 Arcueil (FR); DUCASSE, Jean-Claude, Thales Intellectual Property, F-94117 Arcueil (FR); CHIRON, David, Thales Intellectual Property, F-94117 Arcueil (FR)
(74) Mandataire: Dudouit, Isabelle
(86) Numéro de dépôt international: PCT/EP2005/052894
(87) Numéro de publication internationale: WO 2006/000556

(56) Documents cités:
- EP-A- 0 912 026
- EP-A- 1 298 836
- WO-A-20/04042959
- US-A1- 2002 026 636
- US-A1- 2002 093 948
- US-A1- 2002 191 635
- US-A1- 2003 043 086

## Description

L'ensemble des services du NET et des technologies d'informations et de communications pour tous est devenu l'enjeu majeur des collectivités. Les opérateurs doivent assurer plus de services de qualité. Leurs offres comprennent actuellement le Multimédia, l'Internet et le téléphone réunis, offre habituellement désignée sous l'expression « Triple Play ». Cette offre est permise par la technologie des réseaux dans la fameuse « convergence » du multimédia des communications et de l'informatique. Cette offre n'est cependant pas offerte en réseau sur radio. Or dans les régions l'installation de fibres jusque chez l'habitant serait trop onéreux et les lignes téléphoniques ne peuvent supporter les débits d'un « triple play » de qualité

Un réseau régional ou départemental comprend généralement un réseau de transport ou dorsale, en fibre optique (étant donné les débits à fournir à quelques 100 000 foyers) et des réseaux d'ACCES vers les abonnés ou groupe d'abonnés. Depuis les dorsales, on doit connecter chaque abonné ou groupe d'abonnés. L'accès des abonnés au service est depuis longtemps le goulot d'étranglement des réseaux.

Pour les performances envisagées dans un habitat moyennement dense ou dispersé, l'ADSL ne peut convenir à terme en raison des longueurs des fils qui limitent le débit instantané. S'il faut réimplanter des fils plus courts avec plus de commutateurs, il semble préférable alors de mettre des fibres, mais le coût est trop élevé pour un opérateur qui cherche de la rentabilité à trois ans.

Les solutions satellites présentent l'inconvénient de ne pas assurer du tout une capacité suffisante.

Il apparaît donc que les solutions radio sont préférables à condition qu'elles procurent : les débits suffisants vers l'abonné, notamment pour le multimédia, et la capacité locale c'est-à-dire la bande totale pour que chacun puisse échanger ses propres contenus Internet. De tels débits ne s'obtiennent en radio qu'à des fréquences élevées, dans les bandes Ku et W correspondant à des longueurs d'onde de quelques centimètres ou quelques millimètres. L'idée est d'associer et intégrer ces deux bandes en profitant au mieux de leurs possibilités et de leurs caractéristiques et contraintes

Dans la suite de la description, on définit :
o Le débit, qui a trait à la bande instantanée dont l'abonné a besoin par exemple pour la télévision à haute définition TVHD (particulier) ou pour le bureau virtuel (entreprise).
o La capacité, qui concerne le nombre de clients qui pourront être desservis avec une qualité de service acceptable (QoS).

Voir US-A-2002/0093948 (Dertz et al.).

L'invention concerne un système d'accès d'un ou de plusieurs abonnés à un réseau offrant des services à très haut débit caractérisé en ce qu'il comporte au moins les éléments suivants :
o une station de base équipée d'émetteurs récepteurs fonctionnant au moins dans une plage de fréquence G₁ correspondant aux services multimédia (TV HDTV VoD...) et aux services Richmédia (Image et Internet Synchronisé) et dans une plage de fréquence G₂ correspondant aux services Internet et voix
   o ces plages de fréquences sont divisées en GROUPES de canaux de nombre variable, ces Groupes correspondent aux services/ de diffusion de télévision , de Vidéo à la demande, de richmedia, d'INTERNET et voix descendants et d'INTERNET et voix montants. Le nombre de canaux de chaque Groupe varie de 0 à N selon les besoins de service de la zone couverte.
   o ces Groupes de canaux utilisent par exemple les formes d'ondes standardisées les mieux adaptées aux classes de contenus qu'elles véhiculent comme aux contraintes des plages de fréquences.
o une ou plusieurs stations relais comportant des émetteurs récepteurs adaptés à fonctionner dans les même plages G₁ et G₂ assurant la continuité de l'accès, soit pour accroître la zone d'accès, soit pour en assurer la couverture totale par recouvrement de faisceaux (ou en anglo-saxon « cross-beam »)
o un abonné comportant au moins un capteur comprenant un récepteur fonctionnant dans la plage de fréquence G₁ et un émetteur récepteur fonctionnant dans la plage de fréquence G₂.

Les antennes présentent des diagrammes divers sur les émetteurs et récepteurs conformés au terrain à illuminer.

La plage de fréquence G₁ correspond par exemple aux fréquences [40,5 - 43,5 GHz] et la plage G₂ aux fréquences des bandes C, Ku ou Ka des systèmes courants de transmission sans fil.

Le récepteur fonctionnant dans la plage de fréquence G₁ interface l'éther avec une antenne lentille et l'émetteur-récepteur fonctionnant dans la plage G₂ interface l'éther avec une antenne patch.

Le système selon l'invention présente notamment les avantages suivants :
o Selon le besoin de l'abonné, le système selon l'invention, désigné aussi par B-WAN (Broadband Wireless Access Network) réalise l'accès de l'abonné vers l'infrastructure. Cette architecture peut être « en multi points ». Elle connecte chaque abonné ou groupe d'abonnés sur un réseau local ou LAN (abréviation de Local Area Network), à un point de présence (PoP) des fibres dorsales du réseau de transport,
o La possibilité de proposer l'offre désignée par « triple play », dans un système sans fil,
o Le fonctionnement en bi fréquence Ku et W,
o Une capacité de plusieurs gigabits,
o L'architecture du système et de ses segments offre une modularité importante pour fournir un grand nombre de déploiements : ville, zone urbaine, montagnes, groupes de villages,
o L'intégration de plusieurs services dans les mêmes équipements apparaît à l'abonné et à l'opérateur comme un réseau unique multifonctions,
o La modularité des Groupes de canaux permet de fournir la meilleure capacité de services demandés ainsi que la meilleure charge du réseau multifonctions (connu sous l'abréviation anglo-saxonne « load balancing »),
o Grâce à l'affectation des formes d'ondes aux groupes et contenus, la meilleure performance pour chaque contenu,
o Les bases relais, la qualité et les directivités variées des antennes utilisées chez l'abonné ou au niveau de la station de base ainsi que leur positionnement assurent tout à la fois :
   o Une bonne couverture de la topologie à éclairer,
   o Une immunité aux interférences et donc une grande densité d'abonnés,
   o Une plus faible puissance de rayonnement, comparée à tout autre système radio-électrique terrestre, tels que la télévision terrestre, le WiFi ou la radio mobile (GSM), donc conduit à une système très écologique,
o En point à quelques points sur les mêmes standards, une base peut alimenter plusieurs autres bases reliant les clients, réalisant ainsi une couverture radio de plusieurs dizaines de Km² et une capacité proche de 10 Gbps. On utilise alors sur la « base maître » un Tube à onde progressive alimentant des antennes très directives vers les autres bases,
o Une intégration simple et compacte du terminal de l'abonné autorisant ainsi une large diffusion, une installation facile et un prix réduit.

D'autres caractéristiques et avantages de la présente invention apparaîtront mieux à la lecture de la description donnée à titre illustratif et nullement limitatif annexée des figures qui représentent :
• La figure 1 un schéma du principe du système d'accès selon l'invention,
• La figure 2 un schéma d'un mécanisme de routage,
• La figure 3 un exemple de répartition des flux de données sur les plages de fréquences, leurs Groupes et canaux
• La figure 4 un exemple de l'architecture d'une station de base selon l'invention,
• La figure 5 un exemple d'émetteur récepteur équipant un abonné,
• La figure 6 un exemple de distribution des services au niveau d'un usager,
• La figure 7 un exemple d'application du système de la figure 1 comprenant des relais disposés de façon à augmenter la couverture,
• La figure 8 un exemple de couverture du système,
• La figure 9 un exemple d'utilisation du système de la figure 1 adapté à réaliser un « cross-beam ».

Afin de mieux faire comprendre le principe mis en oeuvre dans l'invention, l'exemple donné à titre nullement limitatif concerne un système permettant l'accès d'abonnés pour des gammes de fréquence correspondant à la gamme G₁, correspondant à la plage [40,5-43,5 GHz] et à la gamme G₂ ou plage de fréquence [10,7-11,7 GHz].

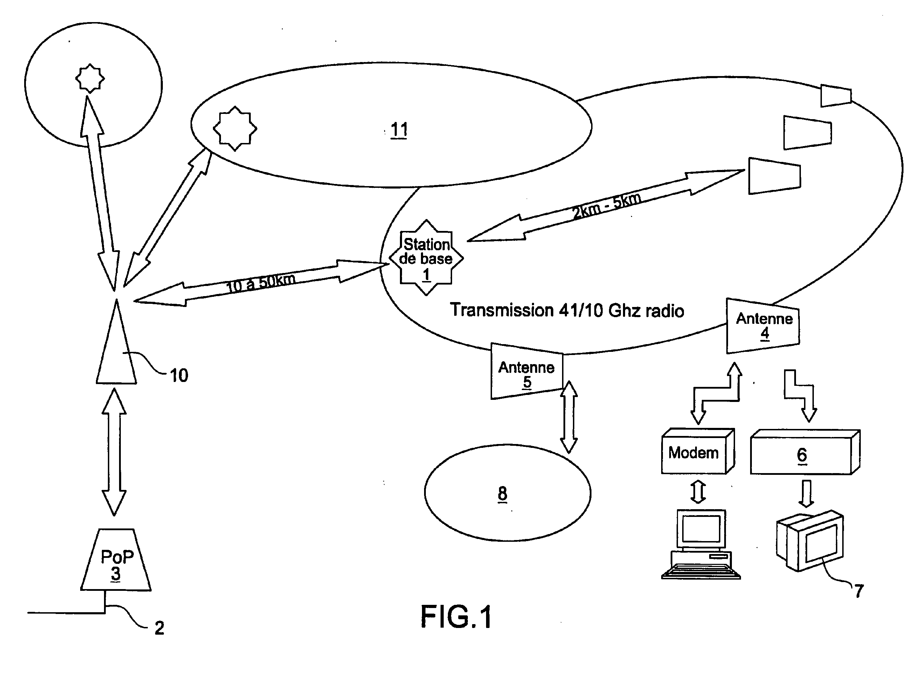

La figure 1 schématise à partir du point d'accès ou PoP, l'accès d'un abonné au réseau de transport de services (ce dernier n'étant pas représenté pour des raisons de clarté). Le réseau peut être partagé par plusieurs opérateurs qui opèrent dans des bandes fixées.

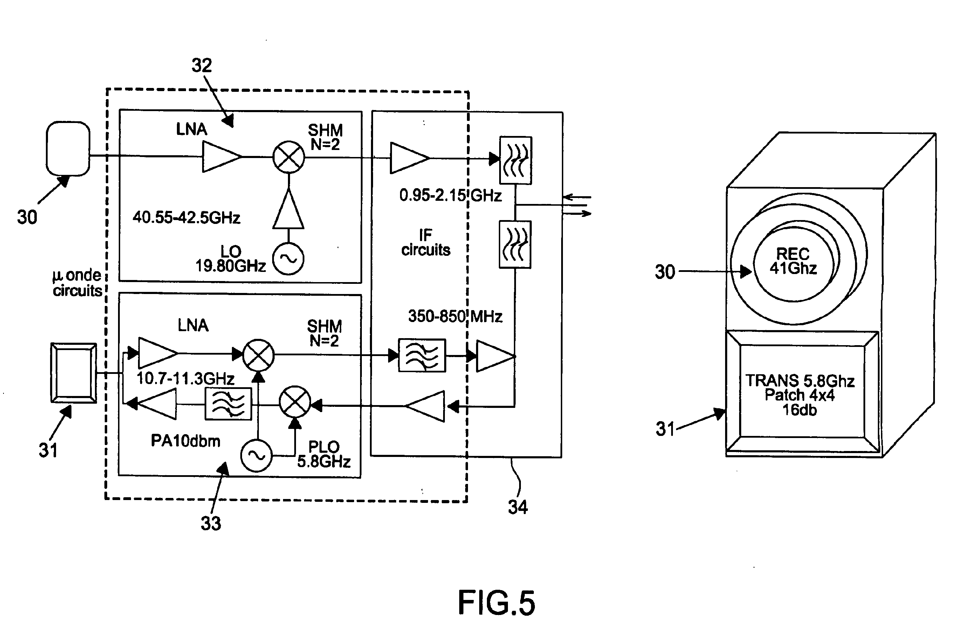

Le principe est simple, une base 1 est en amont reliée à une fibre optique 2 dérivée du réseau opérateur en un point d'accès PoP 3 et elle communique en « aval » avec chaque abonné 4, au moyen d'émetteurs et de récepteurs qui vont respectivement « descendre » le multimédia et les contenus Internet demandés par un abonné, et recevoir les demandes de services par les abonnés et les contenus transmis en provenance des abonnés. Chaque abonné 4 ou groupe d'abonnés 5 (dans un immeuble par exemple) dispose d'une antenne émission-réception large bande ou ODU, «nourrissant» sa boîte décodeur 6 ou en anglo-saxon « set top box » et son PC 7 pour les particuliers, son réseau local 8 ou LAN (Local Area Network) pour les professionnels. Un exemple détaillé d'antenne pouvant équiper un abonné est donné à la figure 5.

Lorsque les stations de base sont éloignées du point d'accès, il est possible d'utiliser un dispositif de raccordement 10 ou Backhaul ayant notamment pour fonction de redistribuer les différentes informations.

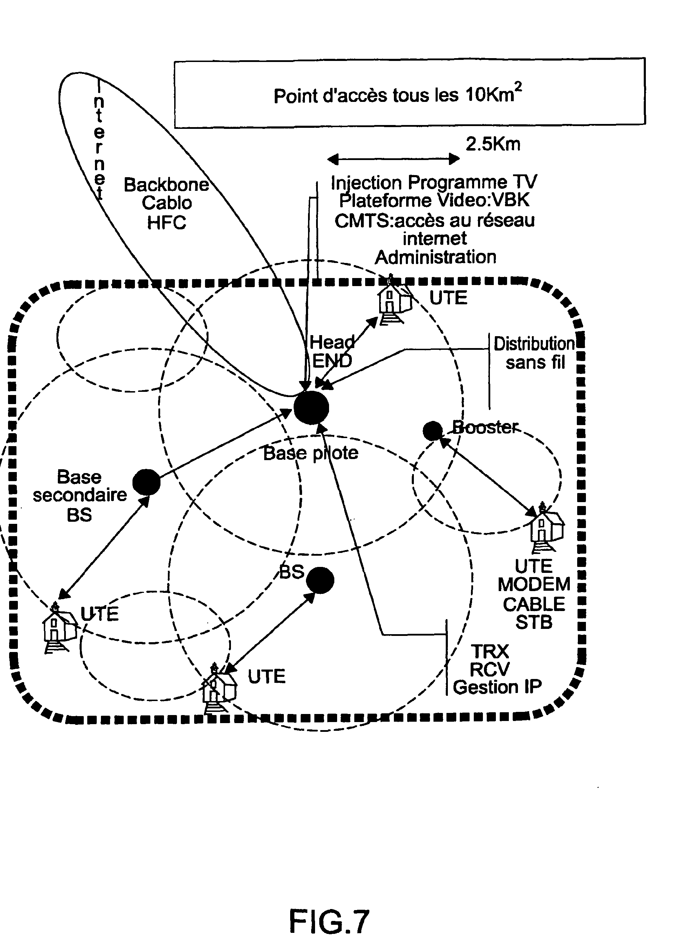

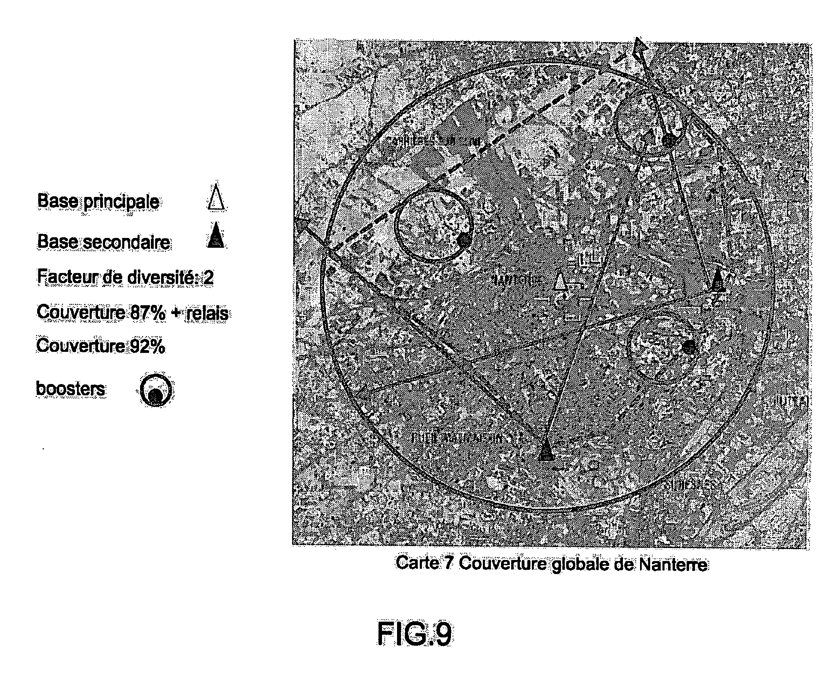

Schématiquement, les segments du système d'accès B-WAN selon l'invention, comportent par exemple :
• Un Raccordement (Backhaul) 10 : comprenant un point d'accès pour les infrastructures, le transport des informations à différents relais pouvant équiper le système, les liens descendant IP (Internet Protocol)
• Les accès aux clusters, 11 : comprenant une station de base pourvue d'un système selon l'invention avec par exemple 0 à 3 relais et un ou plusieurs relais ou booster pour satisfaire aux contraintes de la couverture, un exemple d'utilisation de relais est donnée aux figures 7 et 9,
• Des réseaux locaux des abonnés, 4, 5.

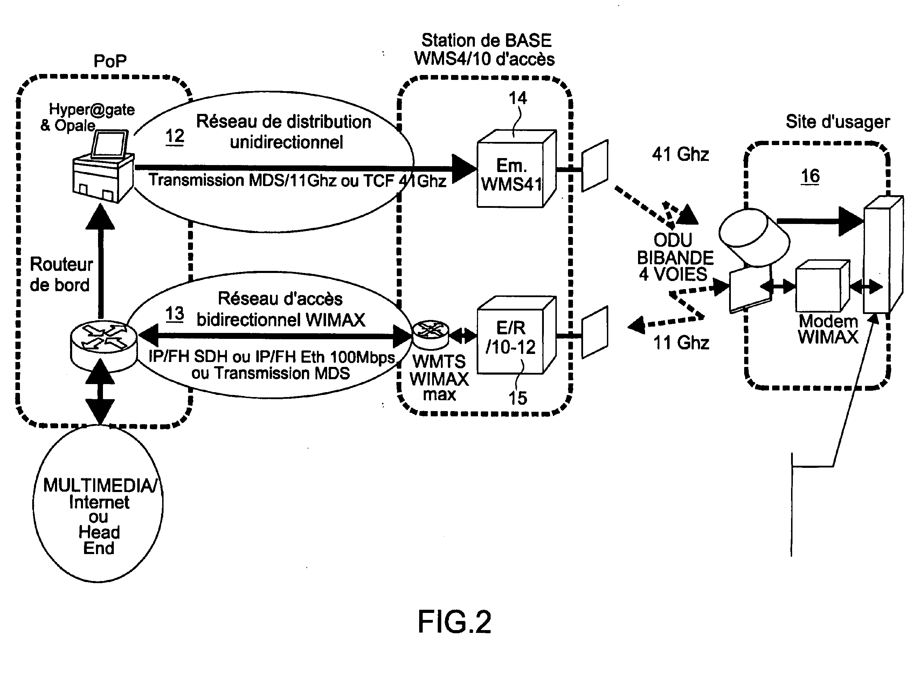

La figure 2 représente un exemple de mise en oeuvre de mécanisme de routage par lien unidirectionnel (UDLR) des informations Internet. Au point d'accès PoP, les flux IP à destination des installations d'usager abonné au très haut débit sont reroutés vers un équipement du commerce 11 adapté et connu de l'Homme du métier qui les achemine sur le lien descendant à haut débit 12 relié à un émetteur 14 fonctionnant dans la plage de fréquence G₁. Les usagers simplement abonnés à WiMaX sont accédés directement (liaisons montantes et descendantes) via le lien WiMaX 13 en liaison avec un émetteur récepteur 15 fonctionnant dans la plage de fréquence G₂. On a par exemple 2 profils d'abonnés ; l'abonné individuel possédant un microordinateur de type PC équipé d'une carte interface Bis et interface Ethernet/USB vers modem WiMaX, plus un logiciel routeur du commerce ; le groupe d'abonnés, par exemple un réseau local LAN d'une entreprise, équipé d'un routeur de bord du commerce avec les mêmes interfaces (ethemet par exemple). Les abonnés sont équipés d'une antenne bibande 16, 4 voies adaptée à recevoir les deux bandes de fréquence citées ci-dessus.

Le système selon l'invention utilise par exemple les fréquences suivantes :
• pour le multimédia, tel que la télévision TV, la télévision haute définition (HDTV), la VoD ou le Rich Media professionnel sur la norme DVB S M très performante en radio (adaptées aux STB satellites largement répandues) sur la bande W de 40,5 à 43,5 GHz,
• pour l'Internet bidirectionnel (données et voix), le nouveau standard Wi MaX très efficace en radio est implanté sur la gamme 10,7-11,7 GHz prévue pour les liens hertziens terrestres de données.
• Le système B-WAN dispose ainsi de 8 GHz (en utilisant les deux polarisations) de bande (à partager entre les opérateurs) réutilisables tous les 3 ou 4 kilomètres.

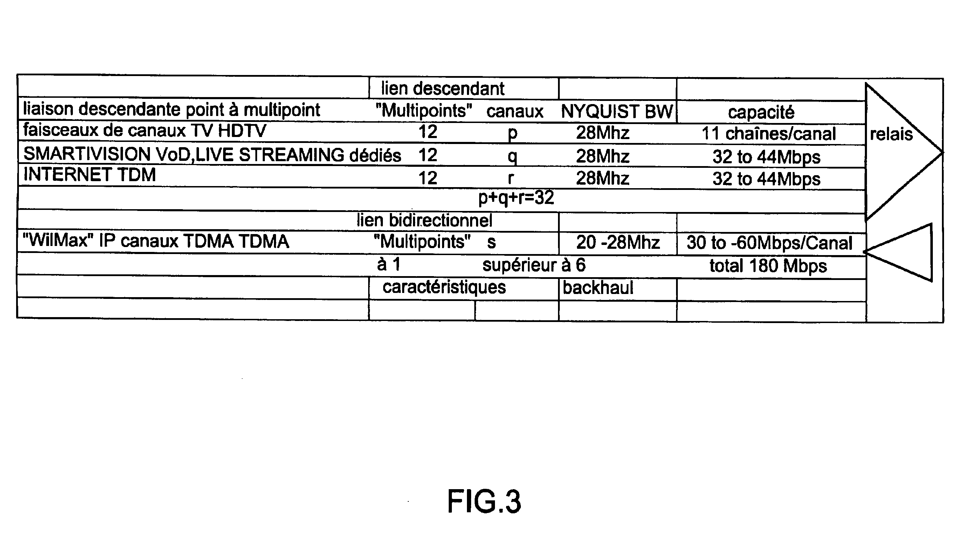

Les caractéristiques et les capacités des dispositifs de raccordement ou Backhaul sont donnés à la figure 3. Le tableau sépare :
o les liens descendants correspondant à la bande de fréquence de 40,5 à 43,5 GHz, et
o les liens bidirectionnels utilisant la bande de fréquence 10,7-11,7 GHz.

Dans cet exemple, on distingue 5 groupes ayant chacun plusieurs canaux au nombre variable de 0 à N, chaque groupe étant affecté à un type de service. Par exemple on peut disposer d'un groupe de radio diffusion d'un point vers tous les autres points ou Broadcast, un groupe de diffusion d'un ou de plusieurs points à un ensemble d'autres points ou Multicast, un groupe Internet UDLR (UniDirectional Link Routing) pour les liaisons descendantes, deux groupes Internet liaison montante, liaison descendante.

Pour chacun des groupes, on choisit la forme d'onde la mieux appropriée, par exemple la forme DVB-S ou M pour la plage 40-44 GHz (multimédia) et le format 802.16 pour la gamme G₂ pouvant être choisie entre 2,5 à 28 GHz (Internet et voix sur Internet) selon le contexte local. L'architecture choisie des Groupes et de leurs canalisations et des formes d'onde standardisée permettent notamment le dégroupage. Ainsi, le système peut accepter de transporter plusieurs opérateurs de services à la fois.

Le système selon l'invention offre la possibilité d'établir une liaison entre la bande de fréquence 40 GHz et la bande de la gamme G₂, par exemple, 11 GHz. Par exemple pour un abonné utilisant de manière intensive les services Internet, il est possible de l'équiper d'un routeur de bord (soit léger en logiciel sur PC soit en équipement distinct pour un groupe de PC en réseau local) La capacité en descente pour ces abonnées sera trois fois supérieures à celle offerte par les équipementiers de systèmes WiMaX.

Un abonné est par exemple équipé d'un dispositif de fonction de routage unidirectionnel UDLR (Unidirectional Link Routing) afin de permettre le routage des flux IP entre la bande Internet à 40 GHz et la bande Internet à 11 GHz et ainsi de servir divers types de clients (léger ou lourds) avec des services de plusieurs niveaux (SLA : agrément de qualité de service de plusieurs niveaux

Par sa très grande capacité descendante, sa canalisation originale et les techniques de type lien unidirectionnel ou UDLR sur IP (Internet protocol) réunis, le système selon l'invention peut s'adapter à la variation de trafic (à la symétrie de trafic par exemple) et optimiser ainsi la capacité offerte (ou en anglo-saxon load balancing).

Les performances associées à un tel système sont par exemple de 45 Mbps partagés pour des secteurs de liens Internet en descendant, avec un débit instantané de 10 MBps ; 30 MBps partagé avec retour de canal, avec 4 MBps pour un abonné simple.

Sans sortir du cadre de l'invention, on peut envisager d'élargir l'utilisation du procédé pour des bandes de fréquence aux plages [25 - 60 GHZ] pour la plage G₁ (ondes millimétriques) et [2,45-28 GHz] pour la plage G₂ ondes centimétriques.

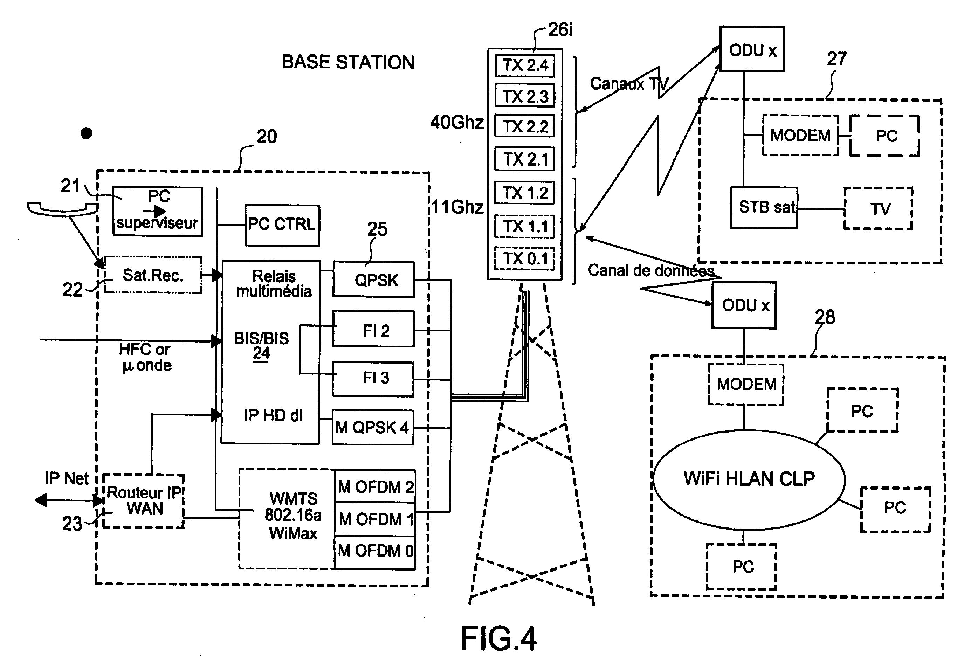

La figure 4 représente un exemple détaillé d'une station de base selon l'invention. Elle comporte par exemple, un bloc 20 ou Indoor Cabinet comprenant par exemple 3 entrées, 21, 22 et 33 destinées respectivement à la réception satellite, aux faisceaux de type HFC (fibre) ou micro-onde, aux connexions Internet (IP net). Les données reçues sur ces différentes voies de connexion sont transmises à un dispositif 24 relais multimédia, puis vers un moyen 25 adapté pour réaliser la montée en fréquence.

Les informations sont ensuite transmises à plusieurs émetteurs-récepteurs 26i appropriés, de la station de base. Ces derniers vont transmettre ou recevoir ces données aux antennes 27 des abonnés individuels ou encore à un groupe d'abonnés 28.

Un abonné individuel est équipé par exemple d'un modem et d'un microordinateur ainsi qu'un décodeur pour le récepteur de télévision. Dans le cas d'un groupe d'abonnés, on dispose d'un réseau local par exemple Ethernet WiFi ou CLP sur lesquels sont connectés plusieurs microordinateurs.

La figure 5 schématise un exemple d'architecture d'un émetteur/récepteur intégré pour un abonné. La partie gauche de la figure représente un circuit intégrable sur SiGe et la partie droite l'antenne résultante intégrée.

L'ensemble récepteur fonctionnant dans la gamme de fréquences G1 40.55 - 42.5 GHz ; et l'émetteur-récepteur fonctionnant dans la plage de fréquence G2 (pouvant être en bande C, Ku ou ka) comprend par exemple 4 parties :
■ Deux éléments rayonnants passifs constitués par exemple :
   • d'une antenne lentille 30 par exemple en polyuréthane dans la plage de fréquence G₁ en réception présentant comme caractéristique d'avoir de très bons lobes secondaires, et
   • d'une antenne imprimée « patch » 31 dans la plage de fréquence G₂ en émission réception précédé d'un dispositif d'isolation (non représenté). La fonction de réception simplifiée de ce récepteur permet notamment l'intégration de l'ensemble sur un même circuit ou puce SiGe.
■ un récepteur 32 adapté à fonctionner dans la plage de fréquence G₂ comprenant par exemple un amplificateur à faible bruit LNA GaAs, un mélangeur fonctionnant sur le deuxième harmonique d'un oscillateur simple par exemple un oscillateur DRO. La sortie du mélange est amplifiée et filtrée de façon à sortir dans le haut de la bande BIS du câble (2.1.Ghz à 900mhz),
■ sur le même sous circuit un récepteur 33 en bande Ku équivalent à la LNB satellite du commerce et un émetteur composé d'un amplificateur de 100mw environ, précédé éventuellement d'un préampli (non représenté) d'un mélangeur activé par un oscillateur stabilisé par boucle de phase, émetteur et récepteur fonctionnant en TDD
■ un sous circuit d'adaptation 34 de filtrage et mélange permettant d'isoler et grouper respectivement les signaux conformément aux normes en vigueur sur les câbles de descentes domestiques.

L'ensemble est logé dans une boite étanche au ruissellement, la face avant recevant les deux antennes et la face arrière le câble domestique d'entrée sortie vers les décodeurs TV et modem de l'abonné.

Les antennes ont des diagrammes adaptés pour les bases à la couverture du terrain et des diagrammes directifs à faibles lobes secondaires pour les abonnés assurant l'immunité aux interférences en forte densité et la protection radioélectrique.

La structure caractéristique d'antenne patch permet notamment de couvrir des secteurs dans des angles précis.

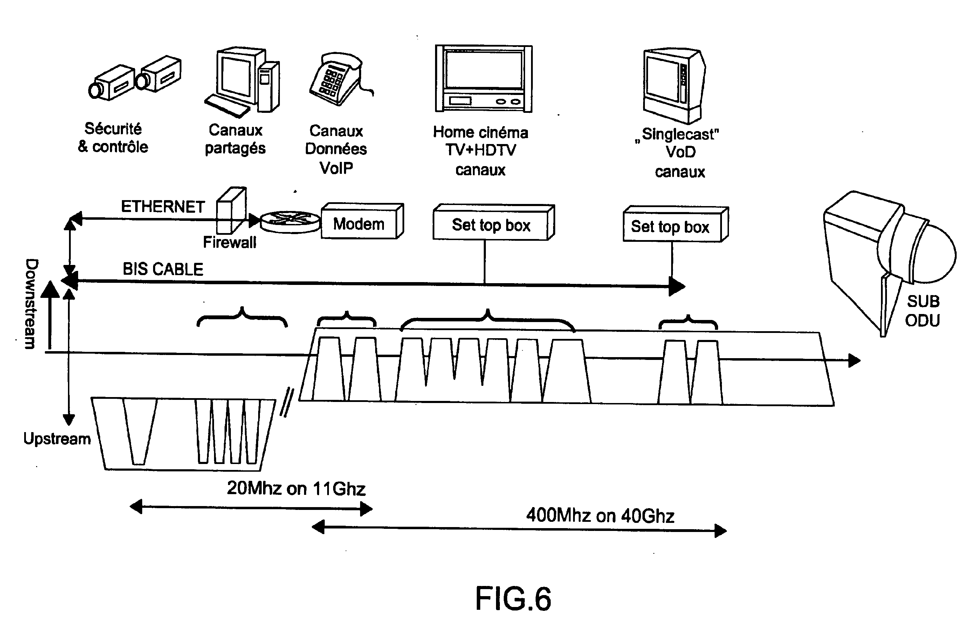

La figure 6 représente un exemple de distribution des services au niveau d'un usager offert par le système.

La figure 7 donne un exemple d'utilisation du système B-WAN selon l'invention utilisant plusieurs relais hyperfréquence ou boosters. Ces relais composés d'émetteurs-récepteurs utilisent les éléments de la base et du terminal abonné pour retransmettre les données, informations ou services dans les zones masquées ou au-delà de la portée de la base principale. L'alimentation de ces relais peut être effectuée au moyen de panneaux solaires lorsque leur puissance les limitent à une portée du Km. La figure montre un exemple de base pilote balayant 1 à 4 secteurs, avec des faisceaux d'émission réception d'angle 90°, 60° ou 30°. BS désigne une base secondaire ou relais, ce dernier est par exemple un simple amplificateur direct large bande.

Une base relais couvre des secteurs d'angle varié. Une telle architecture permet notamment d'étendre la couverture du système B-WAN. Les bases et leurs relais utilisent des antennes adaptées pour couvrir des secteurs de 30° à 360° et peut mettre en oeuvre 1 à 6 secteurs par exemple.

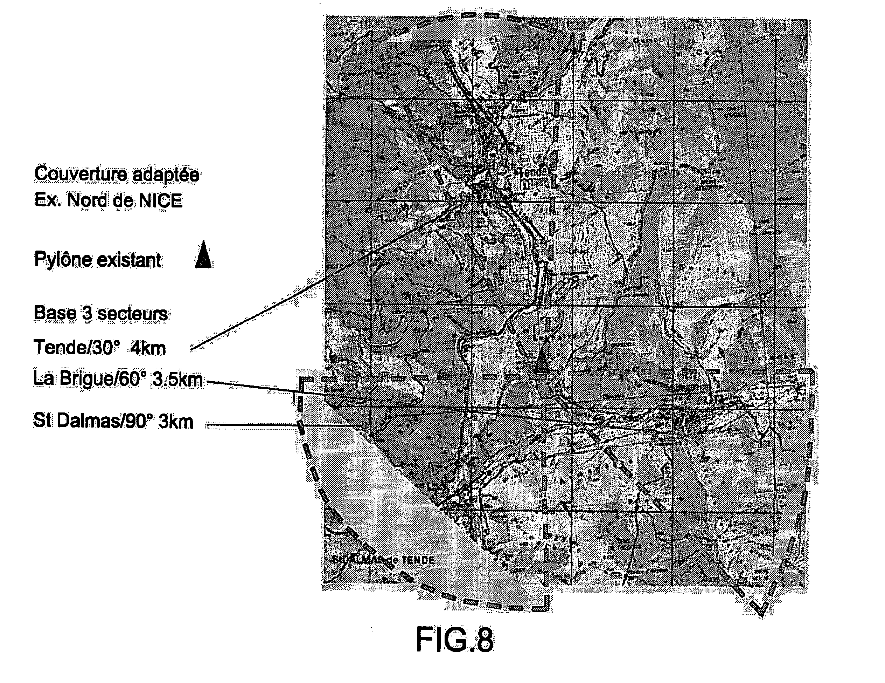

La figure 8 présente un exemple de couverture en montagne permettant d'aller chercher trois bourgs à la fois distants de 4 ou 5 Km l'un de l'autre.

La figure 9 représente un autre exemple d'utilisation du système selon l'invention comprenant plusieurs relais disposés de façon à balayer la totalité ou la presque totalité d'une zone géographique donnée. Cette disposition conduit à un croisement de faisceaux ou en anglo-saxon « cross-beam ». Les bases relais sont disposées par rapport à la station principale afin que tout point situé à l'intérieur d'une zone géographique donnée puisse voir au moins une base. L'ajout de relais très faible puissance type 20mw ou booster permet de combler les « trous » éventuels (zones de faibles dimensions non couvertes).

## Revendications

1. Système d'accès d'un ou de plusieurs abonnés à un réseau offrant des services à très haut débit **caractérisé en ce qu'**il comporte au moins les éléments suivants :
o une station de base équipée d'émetteurs récepteurs fonctionnant au moins dans une plage de fréquence G₁ correspondant aux services multimédia,aux services Richmédia, (Image et Internet synchronisé), et dans une plage de fréquence G₂ correspondant aux services Internet et voix, les plages de fréquences G₁ et G₂ étant divisées en Groupes de canaux au nombre variable de 0 à N, chaque Groupe étant affecté à un type de service sur une forme d'onde optimisée pour son contenu et pour sa fréquence (performances, qualité de service ou QoS, etc)
o un abonné comportant au moins un capteur comprenant un récepteur fonctionnant dans la plage de fréquence G₁ et un émetteur récepteur fonctionnant dans la plage de fréquence G₂.

2. Système selon la revendication 1 **caractérisé en ce que** la plage de fréquence G₁ correspond aux fréquences [40,5 - 43,5 GHz] et la plage G₂ aux fréquences des bandes C, Ku ou Ka des systèmes courants de transmission sans fil.

3. Système selon l'une des revendications 1 ou 2 **caractérisé en ce que** le récepteur fonctionnant dans la plage de fréquence G₁ interface l'éther avec une antenne lentille et **en ce que** l'émetteur-récepteur fonctionnant dans la plage G₂ interface l'éther avec une antenne patch.

4. Système selon la revendication 4 **caractérisé en ce que** les antennes patch de la base sont adaptées pour produire des diagrammes de rayonnement adaptés à la couverture d' une ou plusieurs zones d'abonnés.

5. Système selon la revendication 1 **caractérisé en ce qu'**un abonné qui est équipé d'un dispositif de fonction de routage unidirectionnel UDLR (Unidirectional Link Routing) permettant le routage des flux IP entre la bande dédiée à l'Internet sur les fréquences à 40 GHz et la bande dédiée à l'Internet dans les fréquences C, Ku ou Ka peut être aussi routé depuis cette même bande à 40Ghz sur un lien ADSL et ainsi de servir divers types de clients (léger ou lourds) avec des services de plusieurs niveaux selon la disponibilité locale des moyens de télécommunication existant

6. Système selon la revendication 1 **caractérisé en ce qu'**il comporte un ou plusieurs relais recevant l'information d'une station de base et la relayant à un ou plusieurs abonnés en continuité de la fonction d'accès ou en raccordement (backhaul).

7. Système selon la revendication 1 **caractérisé en ce qu'**il comporte un ou plusieurs relais disposés par rapport à la station principale de façon telle que les faisceaux issus des antennes des bases se recoupent.

8. Système selon la revendication 1 **caractérisé en ce qu'**il comporte un ou plusieurs relais, la ou les stations de base et les relais comprenant des antennes adaptées pour couvrir des secteurs variant de 30 ° à 360°.

9. Dispositif d'émission et de réception **caractérisé en ce qu'**il comporte au moins les éléments suivants, deux éléments rayonnants passifs comportant :
o une antenne lentille fonctionnant dans une plage de fréquence G₁ correspondant aux services multimédia, aux services Richmédia, (Image et Internet synchronisé), et
o une antenne patch adaptée à fonctionner dans une plage de fréquence G₂ correspondant aux services Internet et voix.

## Claims

1. Access system for one or more subscribers to a network offering very high bit rate services, **characterized in that** it comprises at least the following elements:
○ a base station equipped with transceivers operating at least in a frequency range G₁ corresponding to the multimedia services, to the Richmedia services (synchronized image and Internet), and in a frequency range G₂ corresponding to the Internet and voice services, the frequency ranges G₁ and G₂ being divided into groups of channels in numbers variable from 0 to N, each group being assigned to a type of service on a waveform that is optimized for its content and for its frequency (performance, quality of service or QoS, etc.)
○ a subscriber comprising at least one sensor comprising a receiver operating in the frequency range G₁ and a transceiver operating in the frequency range G₂.

2. System according to Claim 1, **characterized in that** the frequency range G₁ corresponds to the frequencies [40.5 - 43.5 GHz] and the range G₂ to the frequencies of the C, Ku or Ka bands of the current wireless transmission systems.

3. System according to one of Claims 1 or 2, **characterized in that** the receiver operating in the frequency range G₁ interfaces the ether with a lens antenna and **in that** the transceiver operating in the range G₂ interfaces the ether with a patch antenna.

4. System according to Claim 3, **characterized in that** the patch antennas of the base are adapted to produce radiation patterns suited to the coverage of one or more subscriber areas.

5. System according to Claim 1, **characterized in that** a subscriber equipped with a unidirectional routing function device UDLR (Unidirectional Link Routing) enabling IP streams to be routed between the band dedicated to the Internet on the 40 GHz frequencies and the band dedicated to the Internet, in the C, Ku or Ka frequencies, can also be routed from this same 40 GHz band over an ADSL link and so serve various types of customers (light or heavy) with services on multiple levels dependent on the local availability of the existing telecommunication means.

6. System according to Claim 1, **characterized in that** it comprises one or more relays receiving the information from a base station and relaying it to one or more subscribers in continuity of the access function or in backhaul mode.

7. System according to Claim 1, **characterized in that** it comprises one or more relays positioned relative to the main station in such a way that the beams from the base antennas intersect.

8. System according to Claim 1, **characterized in that** it comprises one or more relays, the base station or stations and the relays comprising antennas suitable for covering sectors varying from 30° to 360°.

9. Transmission and reception device, **characterized in that** it comprises at least the following elements, two passive radiating elements comprising:
○ a lens antenna operating in a frequency range G₁ corresponding to the multimedia services, to the Richmedia services (synchronized image and Internet), and
○ a patch antenna suitable for operating in a frequency range G₂ corresponding to the Internet and voice services.

## Patentansprüche

1. Zugangssystem für einen oder mehrere Abonnenten zu einem Netzwerk, das Dienstleistungen mit sehr hohem Durchsatz bietet, **dadurch gekennzeichnet, dass** es mindestens die folgenden Elemente aufweist:
• eine Basisstation, die mit Sendern/Empfängern ausgestattet ist, die in mindestens einem Frequenzbereich G₁ funktionieren, der den Multimedia-, Rich-Media-Dienstleistungen (Bild und Internet synchronisiert) entspricht, und in einem Frequenzbereich G₂, der den Internet- und Sprachdienstleistungen entspricht, wobei die Frequenzbereiche G₁ und G₂ in Gruppen von Kanälen mit einer Anzahl, die von 0 bis N variabel ist, unterteilt sind, wobei jede Gruppe einem Dienstleistungstyp auf einer Wellenform zugewiesen ist, die für ihren Inhalt und für ihre Frequenz optimiert ist (Leistungen, Dienstleistungsqualität oder QoS usw.),
• einen Abonnenten, der mindestens einen Sensor aufweist, der einen Empfänger aufweist, der in dem Frequenzbereich G₁ funktioniert, und einen Sender-Empfänger, der in dem Frequenzbereich G₂ funktioniert.

2. System nach Anspruch 1, **dadurch gekennzeichnet, dass** der Frequenzbereich G₁ den Frequenzen [40,5 - 43,5 GHz] entspricht, und der Frequenzbereich G₂ den Frequenzen der Bänder C, Ku oder Ka der geläufigen drahtlosen Übertragungssysteme entspricht.

3. System nach einem der Ansprüche 1 oder 2, **dadurch gekennzeichnet, dass** der Empfänger, der in dem Frequenzbereich G₁ funktioniert, die Schnittstelle zwischen dem Äther und einer Linsenantenne herstellt, und dass der Sender-Empfänger, der in dem Frequenzbereich G₂ funktioniert, die Schnittstelle zwischen dem Äther und einer Patchantenne herstellt.

4. System nach Anspruch 4, **dadurch gekennzeichnet, dass** die Basis-Patchantennen Strahlungsdiagramme erzeugen können, die an das Decken einer oder mehrerer Abonnentenzonen angepasst sind.

5. System nach Anspruch 1, **dadurch gekennzeichnet, dass** ein Abonnent, der mit einer Einrichtungs-Routingfunktionsvorrichtung UDLR (Unidirectional Link Routing) ausgestattet ist, die das Routen der IP-Ströme zwischen Band auf den Frequenzen zu 40 GHz, die dem Internet zugewiesen sind, und dem Band auf den Frequenzen C, Ku oder Ka, die dem Internet zugewiesen sind, erlaubt, auch ausgehend von diesem Band zu 40 GHz auf einer ADSL-Verbindung geroutet werden kann und daher für unterschiedliche Client-Typen (leichte oder schwere) mit Dienstleistungen mehrerer Niveaus je nach der lokalen Verfügbarkeit der existierenden Telekommunikationsmittel dienen kann.

6. System nach Anspruch 1, **dadurch gekennzeichnet, dass** es ein oder mehrere Relais aufweist, die die Information von einer Basisstation empfangen und sie an einen oder mehrere Abonnenten als Fortsetzung der Zugangsfunktion oder in Anschluss (Backhaul) weiterleiten können.

7. System nach Anspruch 1, **dadurch gekennzeichnet, dass** es ein oder mehrere Relais aufweist, die in Bezug zu der Hauptstation derart angeordnet sind, dass sich die Strahlen, die aus den Basisantennen hervorgehen, decken.

8. System nach Anspruch 1, **dadurch gekennzeichnet, dass** es ein oder mehrere Relais aufweist, wobei die Basisstation(en) und Relais Antennen aufweisen, die Sektoren, die zwischen 30° und 360° variieren, decken können.

9. Sende- und Empfangsvorrichtung, **dadurch gekennzeichnet, dass** sie mindestens die folgenden Elemente aufweist, wobei zwei passive Strahlungselemente Folgendes aufweisen:
• eine Linsenantenne, die in einem Frequenzbereich G₁ funktioniert, der den Multimedia-, Rich-Media-Dienstleistungen (Bild und Internet synchronisiert) entspricht, und
• eine Patchantenne, die in einem Frequenzbereich G₂ funktionieren kann, der den Internet- und Sprachdienstleistungen entspricht.
